# EUROPEAN PATENT APPLICATION

(11) **EP 2 927 731 A1**
(43) Date of publication of application: **07.10.2015**
(21) Application number: 15161934.3
(22) Date of filing: 31.03.2015
(51) Int. Cl.: G02B 27/10, F21V 8/00, F21S 8/10

(54) **AN LED LIGHT-MIXING DEVICE AND A LIGHTING AND/OR SIGNAL INDICATION DEVICE**

(30) Priority: 01.04.2014 CN 201420155305 U
(71) Applicant: Valeo Lighting Hubei Technical Center Co Ltd, 430056 Wuhan, Hubei (CN)
(72) Inventor: Chen, Chen, 430056 WUHAN (CN)
(74) Representative: Schaffner, Jean

(57) **Abstract**

The present utility model discloses a light-emitting diode (LED) light-mixing device, comprising a first LED, used to emit light of a first color; a second LED, used to emit light of a second color that is different from said first color; and a light-mixing light guide; said light-mixing light guide is provided with a first inlet, a second inlet, and an outlet; said first inlet is used to receive the light of said first color emitted by said first LED; said second inlet is used to receive the light of said second color emitted by said second LED; and mixed light is emitted from said outlet. The present utility model also discloses a lighting and/or signal indication device. The present utility model, by performing light mixing in a light-mixing light guide, can obtain light of various colors to complete lighting and/or signal indication functions.

## Description

### Technical Field

The present utility model relates to the technical field of lighting and signal indication, particularly to an LED light-mixing device and a lighting and/or signal indication device provided with said LED light-mixing device.

### Background Art

Light-emitting diodes (LEDs), with small sizes and high luminous efficiencies, have become the mainstream light source components. For example, LEDs can be used for a wide variety of luminaires, such as indicator lights and road illuminating lamps. However, when homogenous LEDs are used as light sources, due to their limited wavelength ranges, the types of the colors of the emitted light are limited. In certain cases, the application needs cannot be met. Thus, LEDs with narrow luminescent spectra are needed to generate illuminating light with wide wavelength ranges.

### Summary of the Utility Model

The purpose of the present utility model is to provide a device that can complete effective light mixing on LEDs and a lighting and/or signal indication device having said light mixing function.

In order to achieve the aforesaid purpose, the technical solution of the present utility model is implemented as follows:
According to an aspect of the present utility model, an LED light-mixing device is provided, comprising:
   a first LED, used to emit light of a first color;
   a second LED, used to emit light of a second color that is different from said first color; and
   a light-mixing light guide; said light-mixing light guide is provided with a first inlet, a second inlet, and an outlet; said first inlet is used to receive the light of said first color emitted by said first LED; said second inlet is used to receive the light of said second color emitted by said second LED; and mixed light is emitted from said outlet.

Further, said first inlet and said second inlet are located on the same side of said light-mixing light guide.

Further, said first inlet and said second inlet are respectively located on one of the two opposite sides or one of the two adjacent sides of said light-mixing light guide. Further, said light-mixing light guide is provided with a first branch portion and a second branch portion; said first inlet is located in the end part of said first branch portion; and said second inlet is located in the end part of said second branch portion.

Further, said light-mixing light guide is provided with a phosphorus layer at said first inlet and/or said second inlet.

Specifically, said light-mixing light guide is provided with a scattering bulge at said first inlet and/or said second inlet and/or said outlet.

Specifically, said LED light-mixing device comprises a plurality of said first LEDs and a plurality of said second LEDs; said first LEDs and/or said second LEDs can be connected or disconnected in all or in part.

Specifically, said LED light-mixing device further comprises a third LED, used to emit light of a third color different from said first color and said second color; said light-mixing light guide is further provided with a third inlet; said third inlet is used to receive the light of a third color emitted by said third LED.

Specifically, said LED light-mixing device further comprises a color mixture adjustment device connected to said first LED and/or said second LED; said color mixture adjustment device can adjust the optical power of said first LED and/or said second LED or control the connection and disconnection of said first LED and/or said second LED to adjust the color of the light emitted from the outlet of said light-mixing light guide.

According another aspect of the present utility model, a lighting and/or signal indication device is further provided, comprising an LED light-mixing device disclosed in the aforesaid technical solution.

In at least one aspect of the aforesaid technical solution of the present utility model, by means of light-mixing in a light-mixing light guide, illuminating light of varying colors can be obtained to complete various lighting and/or signal indication functions and even achieve decorative effects.

### Description of Drawings

Figure 1 shows a schematic diagram for an LED light-mixing device of an embodiment of the present utility model;
Figure 2 shows a schematic diagram for an LED light-mixing device of another embodiment of the present utility model;
Figure 3 shows a schematic diagram for an LED light-mixing device of yet another embodiment of the present utility model.

### Specific Embodiments

By referring to specific embodiments and the drawings, the following describes in detail the technical solution of the present utility model. In the specification, the same or similar reference number is used for the same or similar component. The following description of specific embodiments of the present utility model by referring to the drawings is intended to explain the overall conception of the present utility model, instead of being understood as a limitation of the present utility model.

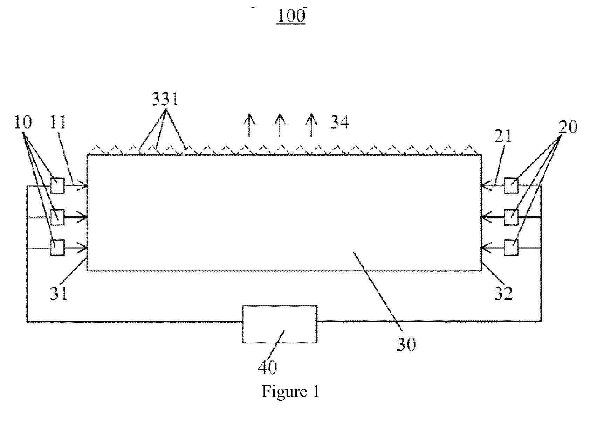

Figure 1 shows an embodiment of the LED light-mixing device 100 according to the present utility model. The LED light-mixing device 100 comprises the first LED 10, the second LED 20, and the light-mixing light guide 30. The first LED 10 is used to emit light of the first color 11; the second LED 20 is used to emit light of the second color 21 that is different from said first color. The light-mixing light guide 30 is provided with the first inlet 31, the second inlet 32, and the outlet 33. Said first inlet 31 is used to receive the light of the first color 11 emitted by the first LED 10; said second inlet 32 is used to receive the light of the second color 21 emitted by the second LED 20; and the mixed light 34 is emitted from said outlet 33.

Though Figure 1 shows three first LEDs 10 and three second LEDs 20, the number of the first LEDs 10 and that of the second LEDs 20 are not limited to those values. For example, one, two, three, four, five, or more first LEDs 10 and/or second LEDs 20 can be used. In addition, the number of the first LEDs 10 and that of the second LEDs 20 are not necessarily the same. For example, the first LEDs 10 and the second LEDs 20 can be arranged in a one-dimensional array or a two-dimensional array.

In the aforesaid embodiment, the light 34 is generated by mixing the light 11 of the first color with the light 21 of the second color. For example, if the first color is red and the second color yellow, the mixed light 34 can be amber (yellowish-brown); if the first color is amber and the second color blue, the mixed light 34 can be white. Though Figure 1 shows LEDs of only two colors, it should be understood that LEDs of three colors can also be used for light mixing. For example, if the first color is red; the second color is yellow; and the third color is blue, the mixed light is white. In the example where LEDs of three colors are used for light mixing, the LED light-mixing device 100 can further comprise a third LED that is used to emit light of a third color different from the first color and the second color. Accordingly, said light-mixing light guide 30 can further be provided with a third inlet; said third inlet is used to receive the light of a third color emitted by said third LED. Certainly, LEDs of more colors can be used for light mixing to obtain more types of light.

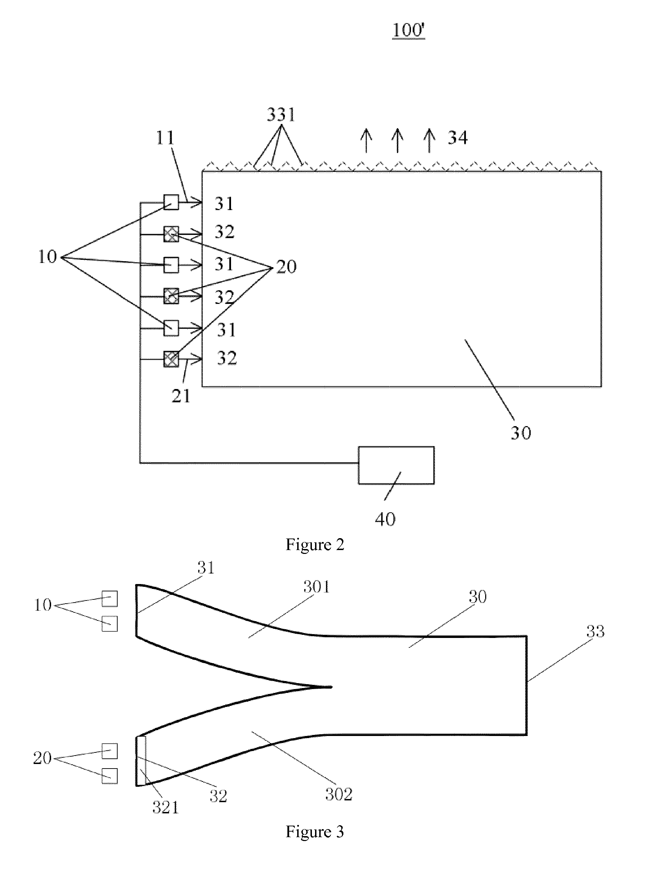

In the embodiment shown in Figure 1, the first LED 10 and the second LED 20 are respectively located on one of the two opposite sides of the light-mixing light guide 30. Accordingly, the first inlet 31 and the second inlet 32 of the light-mixing light guide 30 are respectively located on one of the two opposite sides of said light-mixing light guide 30. However, the arrangement of the first LEDs 10 and that of the second LEDs 20 is not limited to the aforesaid arrangement. The first LEDs 10 and the second LEDs 20 can be arranged on the same side of said light-mixing light guide 30, for example, in the LED light-mixing device 100' shown in Figure 2. In the LED light-mixing device 100' shown in Figure 2, the first LEDs 10 and the second LEDs 20 are alternately arranged on the same side (the left side shown in the figure) of the light-mixing light guide 30. The first inlets 31 and the second inlets 32 of the light-mixing light guide 30 corresponding to the first LEDs 10 and the second LEDs 20 are also alternately arranged on the surface on said side of the light-mixing light guide 30. For example, if a plurality of first LEDs 10 and a plurality of second LEDs 20 are used, the first LEDs 10 and the second LEDs 20 can be arranged in parallel or alternately. In addition, in another example, the first LED 10 and the second LED 20 can also be respectively located on one of the two adjacent sides of the light-mixing light guide 30. Similarly, if a third LED is used, the third LED can also be located on the same side or a different side of the light-mixing light guide 30 as the first LED and/or second LED.

Figure 3 shows a specific structure of an LED light-mixing device according to the present utility model. As shown in the figure, the light-mixing light guide 30 is provided with the first branch portion 301 and the second branch portion 302; said first inlet 31 is located in the end part of the first branch portion 301; and said second inlet 32 is located in the end part of the second branch portion 302. The first LED 10 is arranged opposite to the first inlet 31; the second LED 20 is arranged opposite to the second inlet 32. The outlet 33, through which mixed light is emitted, for example, can be configured on the right of the light-mixing light guide 30 shown in Figure 3. However, such configuration is not required. Alternatively, the outlet 33 can be configured on another side of the light-mixing light guide 30. Optionally, the light-mixing light guide 30 can be provided with the phosphorus layer 321. The phosphorus layer 321 can, after receiving the light, for example, blue light, emitted by an LED, transmit phosphorescence that enters the light-mixing light guide to achieve optical effects different from those achieved by directly transmitting the light emitted by an LED into the light-mixing light guide 30. As shown in Figure 3, the phosphorus layer 321 is configured only at the second inlet 32. However, the present utility model is not limited to this configuration. For example, the phosphorus layer 321 can also be configured at the first inlet 31 or at both the first inlet 31 and the second inlet 32.

The light-mixing light guide 30 can be provided with a scattering bulge 331 at the first inlet 31 and/or the second inlet 32 and/or outlet 33 (as indicated by the broken lines shown on the light-mixing light guide 30 in Figure 1 and Figure 2) to enhance the light mixing effects of the light-mixing light guide 30.

For example, the LED light-mixing device 100 can further comprise the color mixture adjustment device 40 connected to the first LED 10 and/or the second LED 20; said color mixture adjustment device 40 can adjust the optical power of the first LED 10 and/or the second LED 20 or control the connection and disconnection of the first LED 10 and/or the second LED 20 to adjust the color of the light emitted from the outlet 33 of the light-mixing light guide 30. In the actual application, the color mixture adjustment device 40 can be used to achieve various illumination effects or modes. For example, if the color mixture adjustment device 40 sets the first LED 10 to low optical power and the second LED 20 to high optical power, the mixed light can be used for the direction signal lamps of automobiles; if the color mixture adjustment device 40 sets the first LED 10 to high optical power and the second LED 20 to low optical power, the mixed light can be used for brake lamps; if the color mixture adjustment device 40 sets both the first LED 10 and the second LED 20 to high optical power, the mixed light can be used for illuminating lamps. The preceding description is only exemplary.

If a plurality of first LEDs 10 and a plurality of second LEDs 20 are used, said first LEDs 10 and/or said second LEDs 20 can be connected or disconnected in all or in part. By connecting or disconnecting all or some of the first LEDs 10 and/or the second LEDs 20, mixed light of varying intensity and colors can be obtained to complete different functions.

The present utility model further provides a lighting and/or signal indication device that comprises any of the LED light-mixing devices described in the aforesaid examples.

Lighting and/or signal indication devices according to the present utility model can be used as the lighting and/or signal indication lamps of motorized vehicles or the lamps of non-motorized vehicles, and can also be used in other lighting and/or signal indication fields, such as flashlights and signal lamps.

The specification describes the present utility model by referring to the drawings. However, the embodiments disclosed in the drawings are intended to demonstrate preferred modes of implementing the present utility mode, instead of limiting the scope of the present utility model.

While the present utility model has been particularly described above with reference to preferred embodiments, those of ordinary skill in the art can understand that any alterations made to the above-mentioned embodiments without departing from the spirit or principle of the present utility model shall fall within the scope as defined by the Claims or by their equivalents.

## Claims

1. An LED light-mixing device, **characterized in that** said device comprises:
a first LED, used to emit light of a first color;
a second LED, used to emit light of a second color that is different from said first color; and
a light-mixing light guide; said light-mixing light guide is provided with a first inlet, a second inlet, and an outlet; said first inlet is used to receive the light of said first color emitted by said first LED; said second inlet is used to receive the light of said second color emitted by said second LED; and mixed light is emitted from said outlet.

2. The LED light-mixing device according to Claim 1, **characterized in that** said first inlet and said second inlet are located on the same side of said light-mixing light guide.

3. The LED light-mixing device according to Claim 1, **characterized in that** said first inlet and said second inlet are respectively located on one of the two opposite sides or one of the two adjacent sides of said light-mixing light guide.

4. The LED light-mixing device according to Claim 1, **characterized in that** said light-mixing light guide is provided with a first branch portion and a second branch portion; said first inlet is located in the end part of said first branch portion; and said second inlet is located in the end part of said second branch portion.

5. The LED light-mixing device according to Claim 4, **characterized in that** said light-mixing light guide is provided with a phosphorus layer at said first inlet and/or said second inlet.

6. The LED light-mixing device according to any of Claims 1 to 5, **characterized in that** said light-mixing light guide is provided with a scattering bulge at said first inlet and/or said second inlet and/or said outlet.

7. The LED light-mixing device according to any of Claims 1 to 5, **characterized in that** said LED light-mixing device comprises a plurality of said first LEDs and a plurality of said second LEDs; said first LEDs and/or second LEDs can be connected or disconnected in all or in part.

8. The LED light-mixing device according to any of Claims 1 to 5, **characterized in that** said LED light-mixing device further comprises a third LED, used to emit light of a third color different from said first color and said second color; said light-mixing light guide is further provided with a third inlet; said third inlet is used to receive the light of a third color emitted by said third LED.

9. The LED light-mixing device according to any of Claims 1 to 5, **characterized in that** said LED light-mixing device further comprises a color mixture adjustment device connected to said first LED and/or said second LED; said color mixture adjustment device can adjust the optical power of said first LED and/or said second LED or control the connection and disconnection of said first LED and/or said second LED to adjust the color of the light emitted from the outlet of said light-mixing light guide.

10. A lighting and/or signal indication device, **characterized in that** said device comprises an LED light-mixing device disclosed in any of Claims 1 to 9.
